# EUROPEAN PATENT APPLICATION

(11) **EP 2 560 076 A1**
(43) Date of publication of application: **20.02.2013**
(21) Application number: 11768632.9
(22) Date of filing: 13.04.2011
(51) Int. Cl.: G06F 3/041, G01C 21/00, G06F 3/048, G09G 3/20, G09G 3/36, G09G 5/00, G09G 5/36

(54) **DISPLAY DEVICE**

(30) Priority: 21.05.2010 JP 2010116871; 13.04.2010 JP 2010091888
(71) Applicant: Panasonic Corporation, Kadoma-shi Osaka 571-8501 (JP)
(72) Inventor: NAKAI, Jun, Osaka 540-6207 (JP)
(74) Representative: Schwabe - Sandmair - Marx
(86) International application number: PCT/JP2011/002180
(87) International publication number: WO 2011/129109

(57) **Abstract**

Disclosed is a display device wherein a touch panel can be easily operated when an operator operates the device using a gloved-finger, and wherein the number of icons which can be displayed at once is maintained. The display device is provided with: an image display section (17) which displays an image; a touch panel (18) which is disposed on the surface of the image display section (17); a storage section (11) which associates selection icons which show the operation state of an operator such as if the operator has bare hands or gloved-hands, with the size of the operation icons showing operation choices, and stores the result; and a control section (20) which displays the plurality of selection icons on the image display section (17), and displays the operation icon at the size associated with the selection icon selected by the operator, on the image display section (17).

## Description

### Technical Field

The present invention relates to a display apparatus wherein a touch panel that performs predetermined input by means of a predetermined touch operation by a user is disposed on a front surface of an image display section that displays predetermined contents, and more particularly to a display apparatus provided with a touch panel applied to an in-vehicle apparatus such as a car navigation apparatus, or a mobile device that is often operated while being carried around.

### Background Art

Display apparatuses provided with a touch panel are widely used in in-vehicle display apparatuses, and mobile devices such as PNDs and portable media players, and a touch panel can be disposed on the front surface of a display section of a liquid crystal display or organic EL display, and touching the surface thereof enables information to which the touched part corresponds to be input as a signal.

Capacitive touch panels that detect a change in capacitance due to the touch of an operator's finger are widely used as touch panels.

One example of a conventional display apparatus provided with a touch panel has a storage section that stores a plurality of different icon sizes, a capacitance distribution detection section that detects an area of the touch panel touched by an operator by means of a change in capacitance due to a finger of the operator approaching the touch panel, and a control section that selects what is displayed on the touch panel from among the plurality of icon sizes stored in the storage section based on the area detected by the capacitance distribution detection section (see Patent Document 1, for example). Also, a known conventional technology is one whereby a larger icon is displayed when the operator performs an operation using a gloved hand than when the operator performs an operation using a bare hand.

### Citation List

### Patent Literature

### PTL 1

Patent Document 1: Japanese Patent Application Laid-Open No. 2008-217704

### Summary of Invention

### Technical Problem

However, a problem with a conventional display apparatus provided with a touch panel is that the number of icons displayed decreases according to the size and shape of the icons, and all the icons cannot be displayed at one time.

It is an object of the present invention to provide a display apparatus wherein a touch panel can be easily operated when an operator performs an operation using a gloved hand, and the number of icons that can be displayed at one time can be maintained.

### Solution to Problem

The present invention has a configuration provided with: an image display section that displays data; a touch panel that is disposed on the surface of the image display section; a storage section that stores an image that is displayed on the image display section; and a control section that detects an area touched by an operator of the touch panel, reads an image from the storage section based on a detection result, and displays that image on the image display section; wherein the storage section stores in a mutually associated fashion a selection icon indicating an operating state of the operator and an operation icon indicating an operation choice; the size of the operation icon differs for each selection icon; and the control section displays a plurality of the selection icons on the image display section, and displays an operation icon of a size associated with a selection icon selected by the operator on the image display section.

### Advantageous Effects of Invention

According to the present invention, an operation icon of a size corresponding to a selection icon selected by an operator can be read from a storage section that stores an operation icon corresponding to each selection icon, and displayed on an image display section. By this means, the operator can perform a touch panel operation dependably whether bare-handed or gloved.

Also, by maintaining the number of icons that can be displayed on the image display section at one time, operability of an operator can be maintained while maintaining the amount of information by means of an icon displayed on the image display section without greatly impairing the design of an image display.

### Brief Description of Drawings

FIG.1 is a block diagram of an in-vehicle apparatus that includes a display apparatus according to Embodiment 1 of the present invention;
FIG.2 is a drawing showing examples of display screens displayed on an image display section according to Embodiment 1 of the present invention;
FIG.3 is a flowchart for explaining the operation of an in-vehicle apparatus that includes the display apparatus according to Embodiment 1 of the present invention;
FIG.4 is a drawing showing examples of icons displayed on the display apparatus according to Embodiment 1 of the present invention; and
FIG.5 is a drawing showing examples of display screens displayed on an image display section according to Embodiment 3 of the present invention.

### Description of Embodiments

### (Embodiment 1)

Now, a display apparatus provided with a touch panel according to Embodiment 1 of the present invention will be described with reference to the accompanying drawings.

In the following description, an in-vehicle navigation apparatus is described as an example of a display apparatus provided with a touch panel, and therefore an in-vehicle navigation apparatus that includes this display apparatus provided with the touch panel is described simply as an "in-vehicle apparatus."

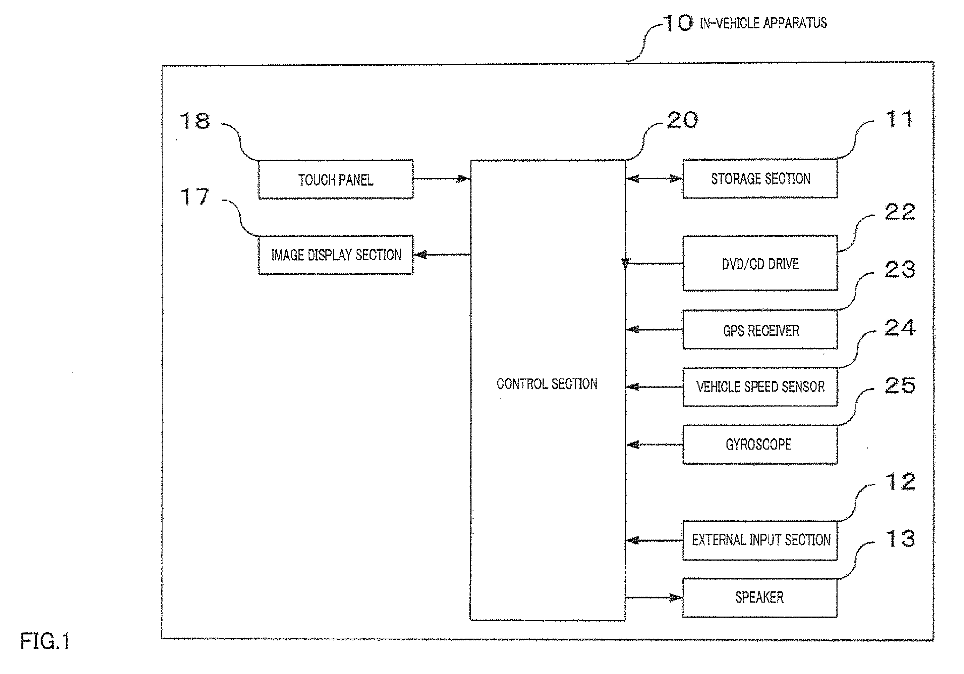

FIG.1 is a block diagram of an in-vehicle apparatus that includes a display apparatus provided with the touch panel according to Embodiment 1 of the present invention.

An in-vehicle apparatus according to Embodiment 1 of the present invention is a so-called car navigation apparatus provided with a navigation function that performs route guidance and the like, an audiovisual playback function that performs playback of audio/video recorded on a recording medium such as a DVD (Digital Versatile Disc), for example, and so forth,

In FIG.1, in-vehicle apparatus 10 is provided with storage section 11, external input section 12, speaker 13, image display section 17, touch panel 18, control section 20, DVD/CD drive 22, GPS receiver 23, vehicle speed sensor 24, and gyroscope 25. Storage section 11, image display section 17, touch panel 18, and control section 20 form a display apparatus.

DVD/CD drive 22, GPS receiver 23, vehicle speed sensor 24, gyroscope 25, and speaker 13 need not be provided integrally inside in-vehicle apparatus 10, and a configuration may be used in which they are provided separately from in-vehicle apparatus 10 and can be connected to or disconnected from in-vehicle apparatus 10 so as to be electrically connected to in-vehicle apparatus 10 when installed.

Storage section 11 is a data storage apparatus such as an HDD or SD card, flash memory mounted on a printed circuit board inside an in-vehicle device, or the like, and one type or a plurality of types may be used.

Storage section 11 stores a basic program necessary for controlling an icon size (size of an icon or display area of an icon) and icon layout for display on image display section 17, and operation of the in-vehicle apparatus. Furthermore, storage section 11 stores various kinds of programs and various kinds of databases, such as a program for control of image display, application software used for execution of the car navigation function or execution of the audiovisual playback function, a database relating to maps for navigation, a database of telephone numbers, and so forth. In addition, as with a general storage section, an area deploying various kinds of programs, various kinds of data, and so forth, and an area in which images are deployed, are also provided in storage section 11.

External input section 12 inputs a signal output from an external device that can be connected to in-vehicle apparatus 10 for example, a video signal or speech signal obtained by playing back a medium such as a DVD or CD, or a video signal or speech signal from a digital TV or the like.

Speaker 13 outputs a sound effect for conveying to an operator the fact that in-vehicle apparatus 10 has received an operation on in-vehicle apparatus 10, speech input to external input section 12 from an external device, or speech, music, or the like played back by DVD/CD drive 22, for example, incorporated in in-vehicle apparatus 10.

Image display section 17 displays an opening screen or menu screen, and data of video, a still image, or the like, input to external input section 12 from an external device, stored in storage section 11. In this embodiment, a case is described in which a general liquid crystal display is used as an example of image display section 17.

In this case, image display section 17 includes a liquid crystal panel that includes a polarization filter, a liquid crystal or glass substrate, and so forth, parts used for a light source of the liquid crystal panel, such as a cold-cathode tube or LED and a light guide plate, an electronic part such as an IC that controls various signals for image display, and a power supply unit for driving the liquid crystal, light source, and electronic part. In this case, the power supply unit may be provided separately from image display section 17.

Touch panel 18 is a transparent panel disposed on the surface of image display section 17. An input operation for in-vehicle apparatus 10 is performed by an operator touching a relevant place on touch panel 18 (in the case of icon display, a position of an icon displayed on image display section 17; in the case of map display, an arbitrary location, and so forth).

Control section 20 includes a microprocessor and an electrical circuit for operating the microprocessor, and performs various kinds of control processing by executing a control program stored in storage section 11. Control section 20 also displays image data obtained by performing control processing on image display section 17.

Also, control section 20 acquires a signal from touch panel 18, calculates a position at which an operation's finger touched the touch panel based on this signal, and compares information on the calculated position with information assigned to the touched position on touch panel 18 stored in storage section 11. Then control section 20 executes a function defined for an icon, menu, switch, or the like associated in advance with a touch area corresponding to the position touched by the operator's finger.

Furthermore, control section 20 reads from storage section 11 and displays on image display section 17 an image that uses an icon shape defined for an icon selected by the operator by means of a setting screen related to icon shape setting.

One microprocessor may be used in control section 20, or a plurality of microprocessors may be used for individual functions such as DVD playback, audio playback, and so forth.

DVD/CD drive 22 plays back a disk on which a speech source (or speech data) and/or video source (or video data) is held. GPS receiver 23 receives a signal from a GPS satellite. Vehicle speed sensor 24 receives a vehicle speed signal from the vehicle, and determines the speed of movement of the vehicle. Gyroscope 25 detects the amount of rotation, the amount of change in the vertical direction, and acceleration, of the vehicle.

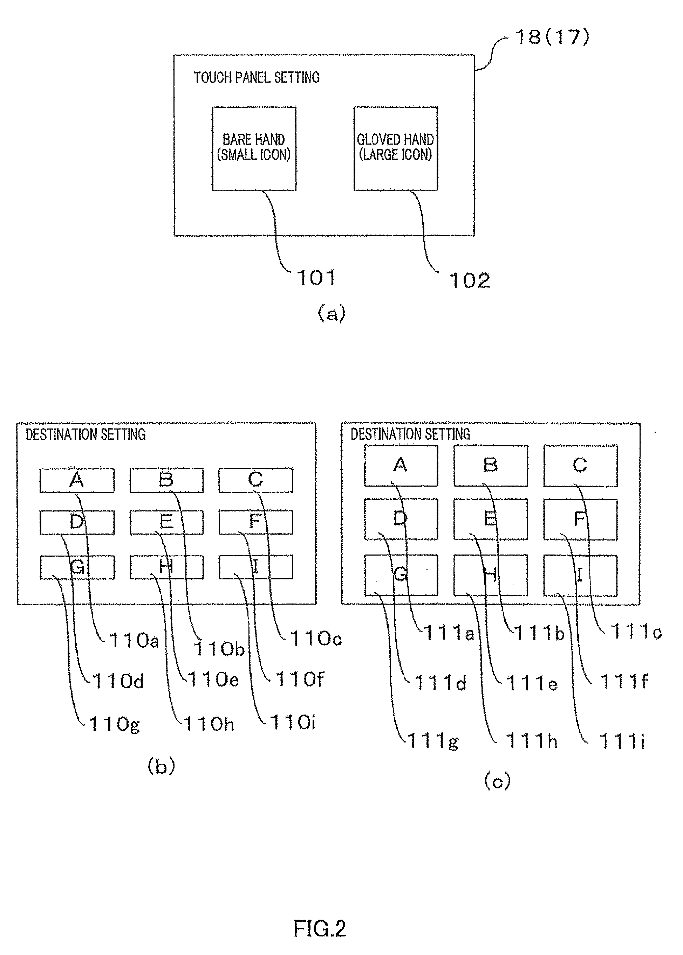

Details of the operation of in-vehicle apparatus 10 configured as described above, and icon display examples, will now be described using FIG.2 through FIG.4.

In this embodiment, a case is described in which touch panel 18 is a capacitive touch panel. Generally, with a capacitive type touch panel, the amount of change in capacitance due to an operator's finger approaching touch panel 18 is detected. When the operator performs an operation using a gloved hand, the amount of change in capacitance is smaller than when the operator performs an operation using a bare hand, and therefore it is necessary to increase the detection sensitivity of touch panel 18 and make the icon size larger.

Here, increasing the detection sensitivity means setting a detection parameter so as to enable a change in capacitance due to an operator's finger touching or approaching touch panel 18 to be detected, even if the change in capacitance of touch panel 18 is smaller.

In this embodiment, a configuration is used whereby the detection sensitivity of touch panel 18 is switched in two stages: "low detection sensitivity" and "high detection sensitivity." In this case, "low" and "high" indicate relative levels of detection sensitivity. The detection sensitivity is set relatively low for a bare-handed operation, and the detection sensitivity is set relatively high for a gloved operation. An actual configuration for switching the sensitivity can be implemented by using general technology, such as switching a threshold value setting for a change in capacitance, and therefore details thereof are omitted here.

When the detection sensitivity is set high ("high detection sensitivity"), control section 20 can detect a small change in capacitance due to operation of touch panel 18 with a gloved finger, making an operation intended by the operator possible.

Generally, when an operator's finger touches or approaches touch panel 18, capacitance changes with a distribution of a shape close to circular, centering on the point of contact between the finger and the touch panel.

Also, when the detection sensitivity is set high, if the operator operates the touch panel bare-handed, control section 20 detects a change in capacitance before the operator's finger touches touch panel 18, and there is thus a possibility of a difference arising between a touch panel position that the operator originally intended to touch and a position at which control section 20 detects a change in capacitance. Consequently, it is necessary to make the icon size for a touch operation by the operator sufficiently large to prevent erroneous operation.

Furthermore, when operating a capacitive type touch panel with a gloved finger, it is necessary for the operator to touch the touch panel with a part that is large in area, such as the ball of the finger, in order to execute an intended operation dependably, and therefore it is desirable for the icon size to be made larger.

Thus, in this embodiment, it is possible to change the icon size by making a bare hand (small icon) or gloved hand (large icon) selection before a function operation of in-vehicle apparatus 10 is performed.

In this embodiment, a screen used by an operator to perform icon size setting is called a touch panel setting screen. The operator selects an icon corresponding to the operator's operating state from among selection icons displayed in the touch panel setting screen. Based on the selection result, control section 20 controls the icon size of an operation icon (an icon indicating a choice of various function operations of in-vehicle apparatus 10 apart from an icon size setting operation) displayed on image display section 17.

FIG.2 is a drawing showing examples of display screens displayed on image display section 17 according to this embodiment.

FIG.2 (a) is a display example of a touch panel setting screen on image display section 17. Two icons are displayed in this screen: bare hand (small icon) icon 101 as a first selection icon, and gloved hand (large icon) icon 102 as a second selection icon.

In the following description, an icon other than bare hand icon 101 or gloved hand icon 102 displayed on image display section 17 after a setting operation is completed via the touch panel setting screen denotes an operation icon.

Bare hand icon 101 is an icon selected when the operator operates touch panel 18 bare-handed. In the event of detecting that bare hand icon 101 has been selected, control section 20 stores the fact that "in a subsequent operation, the operator will operate the touch panel bare-handed" in storage section 11.

After bare hand icon 101 has been selected via the touch panel setting screen, icons displayed on image display section 17 according to various states of in-vehicle apparatus 10 are displayed using a size and layout suitable for operation of touch panel 18 by the operator with a bare hand.

Gloved hand icon 102 is an icon selected when the operator operates touch panel 18 with a gloved hand. In the event of detecting that gloved hand icon 102 has been selected, control section 20 stores the fact that "in a subsequent operation, the operator will operate the touch panel with a gloved hand" in storage section 11.

After gloved hand icon 102 has been selected via the touch panel setting screen, icons displayed on image display section 17 according to various states of in-vehicle apparatus 10 are displayed using a size and layout suitable for operation of touch panel 18 by the operator with a gloved hand. In this case, larger icons are displayed than when bare hand icon 101 is selected. However, the number of icons included in the same kind of screen is the same when bare hand icon 101 has been selected and when gloved hand icon 102 has been selected.

FIG.2 (b) and FIG.2 (c) are drawings showing a "destination setting" screen at the time of navigation function execution as display examples of a screen for various operations (function operations other than an icon size change operation) of in-vehicle apparatus 10. With the "destination setting" screen, nine icons are set to be displayed on image display section 17.

FIG.2 (b) is a "destination setting" screen used when bare hand icon 101 has been selected by means of the "touch panel setting screen." Nine icons 110 are displayed in this screen.

FIG.2 (c) is a "destination setting" screen used when gloved hand icon 102 has been selected by means of the "touch panel setting screen." Nine icons 111 are displayed in this screen.

As shown in FIG.2 (b) and FIG.2 (c), the size of icons 111 displayed after gloved hand icon 102 has been selected is displayed larger than the size of icons 1.0 displayed after bare hand icon 101 has been selected.

By this means, control section 20 can dependably detect an icon that the operator intends to touch.

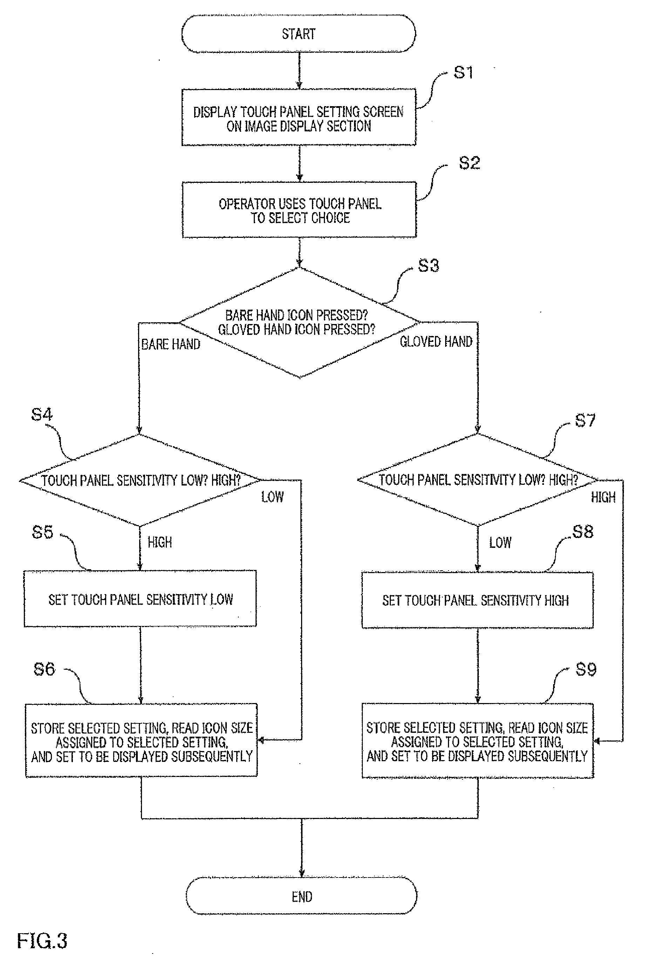

Next, a "touch panel setting" operation of in-vehicle apparatus 10 will be described using the flowchart in FIG.3.

First, in the event of detecting that the touch panel setting function has been selected by means of a predetermined operation, such as the operator turning on the power supply of in-vehicle apparatus 10, control section 20 executes the touch panel setting function (program) stored in storage section 11(start).

Next, control section 20 displays a touch panel setting screen for selection of an icon size by the operator on image display section 17 (step S1).

The operator then operates touch panel 18. Specifically, the operator selects either bare hand icon 101 or gloved hand icon 102, and touches the selected icon with a finger. By this means, control section 20 detects that a change in the capacitance detection value has become larger than a threshold value due to this operation (step S2).

Control section 20 calculates the coordinates of touch panel 18 touched by the operator's finger, and based on those coordinates, performs a determination of whether the icon selected by the operator is bare hand icon 101 or gloved hand icon 102 (step S3).

In the event of determining that bare hand icon 101 of the touch panel setting screen has been selected by the operator in step S3 (step S3: "bare hand"), control section 20 determines whether the sensitivity of the touch panel at that point in time is set low or is set high (step S4).

If the sensitivity of the touch panel at that point in time is set high in step S4 (step S4: "high"), control section 20 sets the sensitivity of the panel low (step S5).

After the sensitivity of the panel has been set low in step 55, or if the sensitivity of the touch panel is set low in step S4 (step S4: "low"), control section 20 stores the fact that bare hand icon 101 has been selected by means of the touch panel setting screen in storage section 11. Also, control section 20 reads a display screen of an icon size assigned to the selected setting (a display screen that includes icons whose icon size is comparatively small as a first display screen), sets this to be displayed on image display section 17 as a subsequent operation screen (step S6), and terminates touch panel setting function processing.

In the event of determining that gloved hand icon 102 of the touch panel setting screen has been selected by the operator in step S3 (step S3: "gloved hand"), control section 20 determines whether the sensitivity of the touch panel at that point in time is set low or is set high (step S7).

If the sensitivity of the touch panel at that point in time is set low in step S7 (step S7: "low"), control section 20 sets the sensitivity of the panel high (step S8).

After the sensitivity of the panel has been set high in step S8, or if the sensitivity of the touch panel is set high in step S7 (step S7: "high"), control section 20 stores the fact that gloved hand icon 102 has been selected by means of the touch panel setting screen in storage section 11. Also, control section 20 reads a display screen of an icon size assigned to the selected setting (a display screen that includes icons whose icon size is comparatively large as a second display screen), sets this to be displayed on image display section 17 as a subsequent operation screen (step S9), and terminates touch panel setting function processing.

As described above, control section 20 stores an operating state of the operator corresponding to the selection icon (bare hand icon 101 or gloved hand icon 102) selected by the operator by means of the touch panel setting screen in storage section 11. Following this, when a destination setting or suchlike operation icon display is performed on image display section 17 by means of an operation by the operator, control section 20 reads the operating state of the operator from storage section 11, and displays an operation screen that includes operation icons of an icon size associated with that state on image display section 17.

In other words, control section 20 stores a choice (bare hand icon 101 or gloved hand icon 102) selected by the operator by means of the touch panel setting screen in the storage section, and subsequently, when control section 20 performs destination setting or suchlike icon display on image display section 17 by means of an operation of the operator, control section 20 reads the choice selected by the operator by means of the touch panel setting screen from storage section 11, and displays a display screen used to operate an individual function (other function) of the in-vehicle apparatus other than a "setting function that uses the touch panel setting screen" that establishes an icon size and display position assigned to that choice on image display section 17.

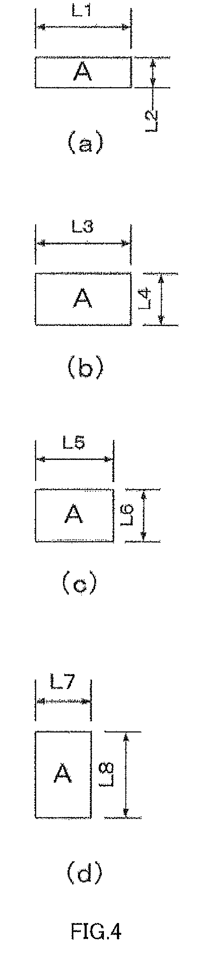

Here, icon sizes will be described using Fig.4. An icon size, display position, and so forth, of an above operation icon is stored in a data table in storage section 11.

That is to say, in this embodiment, two icon sizes for a case in which bare hand icon 101 has been selected and a case in which gloved hand icon 102 has been selected by means of the touch panel setting screen (and "a display screen used for another function") are stored corresponding to bare hand icon 101 and gloved hand icon 102 respectively.

Since image display section 17 of in-vehicle apparatus 10 is often horizontally long, in this embodiment image display section 17 is described as being horizontally long.

An icon size that allows an operator to touch an icon easily means that the icon is large in size both vertically and horizontally with respect to a touching surface of a finger that touches touch panel 18 both vertically and horizontally.

When image display section 17 is horizontally long, it is often the case that the horizontal-direction length of image display section 17 (the length in the horizontal direction when viewing image display section 17 head-on) is sufficiently long with respect to the horizontal-direction length of an area necessary when an operator's finger operates the touch panel, and the horizontal length of an icon displayed on image display section 17 is also sufficiently long with respect to the horizontal-direction length of an area necessary when an operator's finger operates the touch panel.

However, it is often the case that the vertical-direction length of image display section 17 (the length in the height direction, which is the vertical direction, when viewing image display section 17 head-on) is not a sufficient length with respect to the vertical-direction length of an area necessary when an operator's finger operates the touch panel when a plurality of icons are displayed and arranged vertically, and the icon shape also becomes horizontally long.

On the other hand, in the case of a capacitive touch panel, in order for a change in capacitance to occur in a circular shape on the touch panel, it is desirable for a sufficiently large icon shape to be used in both the horizontal direction and the vertical direction with respect to an operator's finger.

Also, as stated above, in order to change the capacitance greatly when operating the touch panel with a gloved finger, it is necessary for an area of contact between the gloved finger and the touch panel to be made larger. Furthermore, when the operator operates the touch panel with a gloved finger, a change in capacitance is smaller than when operating the touch panel bare-handed, and in order to detect the fact that the operator has operated the touch panel using a gloved hand, control section 20 needs to increase the detection sensitivity and detect a small change in capacitance.

Consequently, in order to operate the touch panel with a gloved finger, it is necessary to provide a sufficiently large circle centered on the operator's finger with respect to the operator's finger (the area of contact between the finger and the touch panel) - that is, a sufficiently large icon size in both the horizontal direction and the vertical direction with respect to the operator's finger.

Thus, when using a capacitance type touch panel with a gloved finger, it is desirable to make a setting so that the ratio between the vertical length of an icon and the horizontal length of an icon is equal or close to 1. The length of the shorter of the vertical length of an icon and the horizontal length of an icon (hereinafter referred to as "short side") is longer in the case of a gloved hand than in the case of a bare hand.

FIG.4 is a drawing for explaining icon sizes. FIG.4 (a) shows an example of an icon size in the case of bare-handed operation (after bare hand icon 101 has been selected), and will be referred to as icon example 1. The horizontal length of icon example 1 is denoted by L1, and the vertical length of icon example 1 is denoted by L2. In icon example 1, the fact that image display section 17 of in-vehicle apparatus 10 is horizontally long is taken into account, and therefore horizontal length L1 is set longer than vertical length L2.

With this setting, when a plurality of icons are displayed and arranged as shown in FIG.2 (b), sufficient distance can be maintained between adjacent icons, enabling a layout to be implemented that allows an operator to easily discern and select individual icons.

The icon size shown in icon example 1 allowing easy recognition of individual icons as described above is particularly useful when the color of an icon itself and another color (such as the background color) on the display screen are of the same type of color.

That is to say, the icon size shown in icon example 1 can be said to be a suitable size for bare-handed operation of touch panel 18 by an operator, and a layout in which icons of the type shown in icon example 1 are arranged can be said to be a suitable layout for bare-handed operation of touch panel 18 by an operator.

FIG.4 (b) is a drawing showing icon example 2, which is larger than icon example 1. Horizontal length (long side) L3 of icon example 2 is equal to horizontal length (long side) L1 of icon example 1. Vertical length (short side) L4 of icon example 2 is longer than vertical length (short side) L2 of icon example 1. Expressed as equations, for the long sides L3=L1, and for the short sides L4>L2.

In this case, the ratio between L3 and L4 is closer to 1 than the ratio between L1 and L2, and short side L4 of icon example 2 is longer than short side L2 of icon example 1.

FIG.4 (c) is a drawing showing icon example 3, which is larger than icon example 1. Long side L5 of icon example 3 is shorter than long side L1 of icon example 1, but short side L6 of icon example 3 is longer than short side L2 of icon example 1. Expressed as equations, for the long sides L5<L1, and for the short sides L6>L2.

In this case, also, the ratio between L5 and L6 is closer to 1 than the ratio between L1 and L2, and short side L6 of icon example 3 is longer than short side L2 of icon example 1.

In the case of the icon shown in icon example 2, the fact that image display section 17 of in-vehicle apparatus 10 is horizontally long is taken into account, and therefore horizontal length L3 is set longer than vertical length L4. Similarly, in the case of the icon shown in icon example 3, also, horizontal length L5 is set longer than vertical length L6.

However, the ratio between lengths L3 and L4 of icon example 2 is closer to "1" than the ratio between lengths L1 and L2 of icon example 1. Similarly, the ratio between lengths L5 and L6 of icon example 3 is also closer to "1" than the ratio between lengths L1 and L2 of icon example 1.

By setting the icon size in this way, when a plurality of icons are displayed and arranged as shown in FIG.2 (c), a sufficient area can be maintained to enable an operation by the operator to be detected, and accurate provision can be made for detecting a small change in capacitance by increasing detection sensitivity in order to detect that the touch panel has been operated with a gloved finger as described above.

That is to say, the icon sizes shown in icon example 2 and icon example 3 can be said to be suitable sizes for operation of touch panel 18 by an operator using a gloved hand, and layouts in which icons of the type shown in icon example 2 and icon example 3 are arranged can be said to be suitable layouts for operation of touch panel 18 by an operator using a gloved hand.

FIG.4 (d) is a drawing showing icon example 4, which is larger than icon example 1. Whereas a short side is vertical in icon example 1, a short side is horizontal in icon example 4.

Long side length L8 of icon example 4 is shorter than long side length L1 of icon example 1. Short side length L7 of icon example 4 is longer than short side length L2 of icon example 1.

In this case, also, the ratio between L8 and L7 is closer to 1 than the ratio between L1 and L2, and short side L7 of icon example 4 is longer than short side L2 of icon example 1.

The icon shown in icon example 4 has been conceived of as being used when above in-vehicle apparatus 10 is used rotated to the left or right through 90° - that is, when used in a vertically long state. That is to say, in-vehicle apparatus 10 is here considered as being an apparatus that can be used either in a horizontally long state or in a vertically long state.

As with the icons of icon example 2 and icon example 3, the icon shown in this icon example 4 also enables a sufficient area to be maintained for allowing an operation by an operator to be detected, and enables accurate provision to be made for detecting a small change in capacitance by increasing detection sensitivity in order to detect that the touch panel has been operated with a gloved finger as described above.

That is to say, the icon size shown in icon example 4 can be said to be a suitable size for operation of touch panel 18 by an operator using a gloved hand when an apparatus to which it is applied (in this embodiment, in-vehicle apparatus 10) is used in a vertically long state. A layout in which icons of the type shown in icon example 4 are arranged can be said to be a suitable layout for operation of touch panel 18 by an operator using a gloved hand when an apparatus to which it is applied is used in a vertically long state.

FIG.4 shows three icon examples (icon example 2 through icon example 4) larger than icon example 1, but as long as the conditions that the ratio between the vertical length of an icon and the horizontal length of the icon is equal or closer to 1 than icon example 1, and that a short side of the icon is larger than short side L2 of icon example 1, are satisfied, a vertical/horizontal ratio of a shape other than those shown in the drawing may also be used. A large icon suitable for the vertical/horizontal ratio of the display section or the number of icons to be displayed at one time can be stipulated, and stored in storage section 11.

Also, in this embodiment a case in which an operation icon is rectangular has been described. That is to say, a display area of an operation icon has been described as comprising two long sides and two short sides forming a rectangle.

However, the shape (display area) of an operation icon need not have four angles as in the case of a rectangle, but may also be elliptical or slot-shaped. In such a case, a rectangular shape circumscribing the ellipse or slot may be assumed, and an icon size set in the same way as described above.

As stated above, an in-vehicle apparatus of this embodiment stores icon display screen data whereby an icon of a size such that the ratio between the vertical length and horizontal length of an icon for gloved-hand use is equal or closer to 1 than an icon for bare-handed use and a short side of an icon for gloved-hand use is longer than a short side of an icon for bare-handed use is displayed. By this means, an operator can set a display screen using an icon size suitable for operation with a touch panel setting in accordance with bare-handed or gloved-hand operation.

As a result, even when an operator wears gloves and a change in capacitance is smaller than when an operator is bare-handed, icons of sufficient size both vertically and horizontally can be displayed on the image display section, and a change in capacitance sufficient for the control section to recognize an operation by the operator can be produced, enabling an operation intended by the operator to be performed dependably.

In this embodiment, two choices are set for an icon size, but the present invention is not limited to this, and three or more choices may also be used. In this case, the smaller the change in capacitance of touch panel 18 of an operation, the larger a selection icon and operation icon are displayed, and the more the detection sensitivity is increased. By this means, icon sizes can be set that correspond to a plurality of glove thicknesses or materials, and operator convenience can be improved.

### (Embodiment 2)

Now, a display apparatus provided with a touch panel according to Embodiment 2 of the present invention will be described with reference to the accompanying drawings.

As with embodiment 1, in the following description an in-vehicle navigation apparatus is described as an example of a display apparatus provided with a touch panel, and therefore an in-vehicle navigation apparatus that includes this display apparatus provided with the touch panel is described simply as an "in-vehicle apparatus."

A display apparatus provided with a touch panel according to Embodiment 2 has the same kind of configuration and performs the same kind of processing as in Embodiment 1, and therefore a detailed description thereof is omitted here.

In a conventional display apparatus provided with a touch panel, the size of an icon displayed on the touch panel is selected from a plurality of icon sizes stored in a storage section, and therefore a capacitance distribution detection section for detecting a capacitance distribution when an operator operates the touch panel is necessary, and multiple control lines and sensing electrodes are necessary to detect a capacitance distribution, making the structure complicated.

Thus, in this embodiment, it is possible to change the icon size by making a bare hand (small icon) or gloved hand (large icon) selection when first operating in-vehicle apparatus 10 before a function operation of in-vehicle apparatus 10 is performed. Also, the icon size selected when first operating in-vehicle apparatus 10 is stored, and the stored icon size is used in everyday operations, By this means, an operator performs icon setting only when first using in-vehicle apparatus 10 or when the operator makes such a setting intentionally, and an appropriate icon size can subsequently be displayed to the operator without icon setting being performed. The operator is thus spared a troublesome operation.

In order to implement this embodiment, for example, a button may be provided for proceeding to the operation processing of in-vehicle apparatus 10 in step S1 of the processing flow shown in FIG.3. This button can be implemented by displaying a special icon on image display section 17 for only a short time immediately after the power supply of in-vehicle apparatus 10 is turned on, or providing a special hard key such as a mechanical switch on in-vehicle apparatus 10.

In this case, in a case in which another operator who operates the touch panel with a gloved finger uses the apparatus in addition to an operator who has made a bare hand selection, also, troublesome work can be reduced for all operators, and an icon size allowing easy operation can be provided by means of a simple configuration with no need of detecting a capacitance distribution.

As described above, an in-vehicle apparatus according to this embodiment stores an icon size suitable for an operator's state when first using the apparatus in a storage apparatus, and subsequently an icon size appropriate to the usage state can be set only when the operator so wishes, such as when the operator wears gloves or there is a change of operator. By this means, in subsequent use, easy-to-use icons can be displayed and an operation intended by the operator can easily be performed without icon size setting being performed every time. A device incurring no loss of operability can be implemented by means of a simple configuration.

Consequently, an in-vehicle apparatus of Embodiment 2 has a configuration provided with: an image display section that displays an operation icon for operating the in-vehicle apparatus; a capacitive touch panel that is provided on the front surface of the image display section and detects a change in capacitance; a control section that displays a first selection icon and a second selection icon on the image display section; and a storage section that stores which of the first selection icon or the second selection icon has been selected; wherein the control section calls from the storage section which of the first selection icon or the second selection icon has been selected, and displays an operation icon associated with the selected selection icon on the image display section.

By this means, a selection icon selected by an operator, and an operation icon size associated with the selection icon, are stored, and an operation icon of a size associated with the selection icon selected by the operator can be displayed on the image display section. By this means, the operator can select an intended icon dependably whether bare-handed or gloved. Also, according to this embodiment, a device incurring no loss of operability can be implemented by means of a simple configuration. In addition, by selecting a selection icon only when the operator so wishes, in subsequent use an icon size suitable for the usage state of the operator can be displayed without icon size setting being performed, making a troublesome operation unnecessary.

### (Embodiment 3)

Now, a display apparatus provided with a touch panel according to Embodiment 3 of the present invention will be described with reference to the accompanying drawings.

As with embodiment 1, in the following description an in-vehicle navigation apparatus is described as an example of a display apparatus provided with a touch panel, and therefore an in-vehicle navigation apparatus that includes this display apparatus provided with the this touch panel is described simply as an "in-vehicle apparatus."

In this embodiment, configuration parts similar to those in Embodiment 1 are assigned the same reference codes as in Embodiment 1, and detailed descriptions thereof are omitted.

Embodiment 3 shows icon display examples of image display section 17 by means of a function operation other than an icon size change operation, which is different from Embodiment 1 (display examples of a "facility search" screen at the time of navigation function execution).

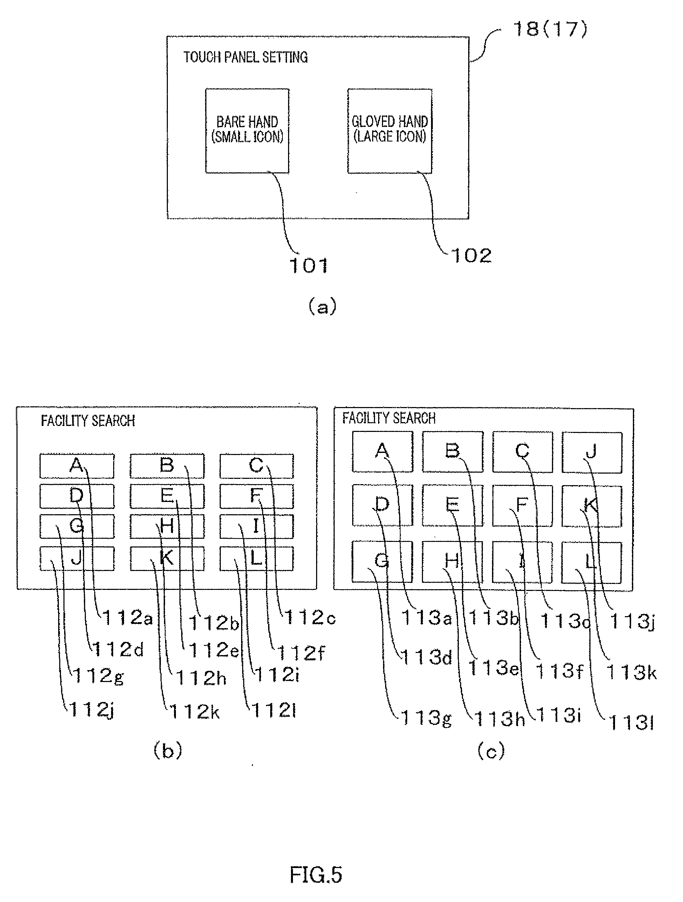

FIG.5 is a drawing for explaining the operation of an in-vehicle apparatus according to this embodiment. FIG.5 (a) is the same as FIG.2 (a).

FIG.5 (b) and FIG.5 (c) are drawings showing examples of a "facility search" screen at the time of navigation function execution as screen display examples for various operations (function operations other than an icon size change operation) of in-vehicle apparatus 10. With the "facility search" screen, 12 icons are set to be displayed.

FIG.5 (b) is a drawing showing an example of a "facility search" screen after bare hand icon 101 has been selected by means of a "touch panel setting screen." Twelve icons 112 are displayed on this screen.

FIG.5 (c) is a drawing showing an example of a "facility search" screen after gloved hand icon 102 has been selected by means of the "touch panel setting screen." Twelve icons 113 are displayed on this screen.

As shown in FIG.5 (b) and FIG.5 (c), the size of icons 113 displayed after gloved hand icon 102 has been selected is displayed larger than the size of icons 112 displayed after bare hand icon 101 has been selected.

Icon sizes and icon layouts displayed on image display section 17 of in-vehicle apparatus 10 according to this embodiment are described in detail below with reference to FIG.4 described in Embodiment 1.

Comparing icons 112 shown in FIG.5 (b) with icons 113 shown in FIG.5 (c), the icon size relationship between the individual icons shown in FIG.5 (b) and the individual icons shown in FIG.5 (c) is similar to the relationship between icon example 1 shown in FIG.4 (a) and icon example 3 shown in FIG.4 (c).

That is to say, the ratio between a long side and a short side of an icon after gloved hand icon 102 has been selected by means of "touch panel setting" (an icon shown in FIG.5 (c)) is closer to 1 than the ratio between a long side and a short side of an icon after bare hand icon 101 has been selected by means of "touch panel setting" (an icon shown in FIG.5 (b)), and a short side of an icon after gloved hand icon 102 has been selected by means of "touch panel setting" is longer than a short side of an icon after bare hand icon 101 has been selected by means of "touch panel setting."

Also, operation icons after bare hand icon 101 has been selected are arranged in m₁ rows of n₁ columns in the display screen, but with a display screen for the same function operation as this, operation icons after gloved hand icon 102 has been selected are arranged in m₂ rows of n₂ columns in the display screen, each being displayed on image display section 17 (where m and n are natural numbers).

That is to say, in the example shown in FIG.5 (b), icons 112 are displayed in 4 rows of 3 columns, but since image display section 17 of in-vehicle apparatus 10 is horizontally long, in the example shown in FIG.5 (c), a facility search screen is displayed in which icons 113 larger than icons 112, designed so that their long sides are shorter but their short sides are longer than for icons 112 displayed after bare hand icon selection, are arranged in 3 rows of 4 columns.

By this means, the number of icons that can be displayed at one time can be maintained at 12 even when large icons suitable for gloved-hand operation are used in the same way as in the case of icons displayed after bare hand icon 101 has been selected by means of "touch panel setting."

As stated above, an in-vehicle apparatus of this embodiment stores icon display screen data whereby an icon of a size such that the ratio between the vertical length and horizontal length of an icon for gloved-hand use is equal or closer to 1 than an icon for bare-handed use and a short side of an icon for gloved-hand use is longer than a short side of an icon for bare-handed use is displayed, and that is furthermore designed so as to maintain the number of icons displayed at one time. By this means, an operator can set a display screen designed so as to maintain the number of icons displayed at one time using an icon size suitable for operation with a touch panel setting in accordance with bare-handed or gloved-hand operation.

As a result, even when an operator wears gloves and a change in capacitance becomes smaller than previously, a display screen designed so as to maintain the number of icons displayed at one time using icons of sufficient size both vertically and horizontally can be displayed on the image display section, and a change in capacitance sufficient for the control section to recognize an operation by the operator can be produced, enabling an operation intended by the operator to be performed dependably.

Furthermore, since the number of icons that can be displayed at one time is maintained using large icons, an operator wearing gloves can also perform operations dependably while maintaining the amount of information that can be displayed on the screen without greatly impairing the design of an image display.

The number of rows and number of columns of an icon display may be other than 4 rows of 3 columns. In this case, an optimal icon size and icon layout can be set for the number of icons displayed at one time.

For example, if the number of icons displayed in one screen is six, 3 rows of 2 columns may be used, and if the number of icons displayed in one screen is 20, 5 rows of 4 columns may be used.

The layout of icons displayed on image display section 17 when a large icon size has been selected may be arbitrary, in which case shifting of the location of a frequently used icon can be lessened, and the burden on the operator can also be reduced.

Alternatively, the most frequently used icon may always be displayed at the bottom-right, for instance, in which case, also, the burden on the operator can be reduced since the operator knows beforehand where a frequently used icon is displayed.

A case in which image display section 17 is vertically long can also be described in a similar way to when image display section 17 is horizontally long, and therefore the image display section may also be vertically long. In this case, provision can also be made for a device having a vertically long display section, such as a mobile device.

The disclosures of Japanese Patent Application Neo.2010-091888, filed on April 13, 2010, and Japanese Patent Application Neo.2010-116871, filed on May 21, 2010, including the specifications, drawings and abstracts, are incorporated herein by reference in their entirety.

### Industrial Applicability

A display apparatus that uses a touch panel of the present invention can display an icon display screen suitable for a case in which operation is performed using a gloved hand and is suitable for use as a display apparatus that uses a touch panel, and can be applied to an in-vehicle apparatus such as a navigation apparatus or in-vehicle display, a mobile device, and so forth.

### Reference Signs List

- 10: In-vehicle apparatus
- 11: Storage section
- 12: External input section
- 13: Speaker
- 17: Image display section
- 18: Touch panel
- 20: Control section
- 22: DVD/CD drive
- 23: GPS receiver
- 24: Vehicle speed sensor
- 25: Gyroscope
- 101: Bare hand (small icon) icon
- 102: Gloved hand (large icon) icon
- 110: Example of icon display in bare-handed operation
- 111: Example of icon display in gloved-hand operation
- 112: Example of icon display in bare-handed operation
- 113: Example of icon display in gloved-hand operation

## Claims

1. A display apparatus comprising:
an image display section that displays data;
a touch panel that is disposed on a surface of the image display section;
a storage section that stores an image that is displayed on the image display section; and
a control section that detects an area touched by an operator of the touch panel, reads an image from the storage section based on a detection result, and displays that image on the image display section, wherein:
the storage section stores in a mutually associated fashion a selection icon indicating an operating state of the operator and an operation icon indicating an operation choice;
a size of the operation icon differs for each selection icon; and
the control section displays the plurality of selection icons on the image display section, and displays an operation icon of a size associated with a selection icon selected by the operator on the image display section.

2. The display apparatus according to claim 1, wherein:
the storage section stores the selection icon selected most recently; and
the control section displays an operation icon of a size associated with a selection icon stored in the storage section on the image display section until receiving a command that causes the selection icon to be displayed on the image display section from the operator.

3. The display apparatus according to claim 1, wherein the control section performs display on the image display section with sizes of each of the selection icon made mutually different, and the higher control section sets detection sensitivity of the touch panel, the larger the selection icon is.

4. The display apparatus according to claim 1, wherein:
the storage section stores a plurality of display screens that include the operation icon associated with each of the selection icon;
display areas of the operation icon in each of the display screen are set so as to be mutually different; and
the control section displays a display screen associated with a selected selection icon on the image display section.

5. The display apparatus according to claim 2, wherein the control section displays the selection icon on the image display section when having detected a predetermined operation.

6. The display apparatus according to claim 2, further comprising a button for displaying the selection icon on the image display section.

7. The display apparatus according to claim 1, wherein:
a display area of the operation icon is rectangular;
the control section performs display on the image display section with sizes of each of the selection icon made mutually different; and
a ratio between a long side and a short side of the operation icon associated with a large selection icon is closer to 1 than a ratio between a long side and a short side of the operation icon associated with a small selection icon.

8. The display apparatus according to claim 1, wherein, in each display screen in which the operation icon is included a plurality and mutually identical number of operation icons are included, operation icons are arranged in m rows of n columns in each of the display screen, and a product of the m and the n is equal in all of the display screens.

## Amended claims

### Amended claims under Art. 19.1 PCT

1. A display apparatus comprising:
an image display section that displays data;
a touch panel that is disposed on a surface of the image display section;
a storage section that stores an image that is displayed on the image display section; and
a control section that detects an area touched by an operator of the touch panel, reads an image from the storage section based on a detection result, and displays that image on the image display section, wherein:
the storage section stores in a mutually associated fashion a selection icon indicating an operating state of the operator and an operation icon indicating an operation choice;
a size of the operation icon differs for each selection icon; and
the control section displays the plurality of selection icons on the image display section, and displays an operation icon of a size associated with a selection icon selected by the operator on the image display section.

2. The display apparatus according to claim 1, wherein:
the storage section stores the selection icon selected most recently; and
the control section displays an operation icon of a size associated with a selection icon stored in the storage section on the image display section until receiving a command that causes the selection icon to be displayed on the image display section from the operator.

3. The display apparatus according to claim 1, wherein the control section performs display on the image display section with sizes of each of the operation icon made mutually different, and the higher control section sets detection sensitivity of the touch panel, the larger the operation icon is.

4. The display apparatus according to claim 1, wherein:
the storage section stores a plurality of display screens that include the operation icon associated with each of the selection icon;
display areas of the operation icon in each of the display screen are set so as to be mutually different; and
the control section displays a display screen associated with a selected selection icon on the image display section.

5. The display apparatus according to claim 2, wherein the control section displays the selection icon on the image display section when having detected a predetermined operation.

6. The display apparatus according to claim 2, further comprising a button for displaying the selection icon on the image display section.

7. The display apparatus according to claim 1, wherein:
a display area of the operation icon is rectangular;
the control section performs display on the image display section with sizes of each of the selection icon made mutually different; and
a ratio between a long side and a short side of the operation icon associated with a large selection icon is closer to 1 than a ratio between a long side and a short side of the operation icon associated with a small selection icon.

8. The display apparatus according to claim 1., wherein, in each display screen in which the operation icon is included a plurality and mutually identical number of operation icons are included, operation icons are arranged in m rows of n columns in each of the display screen, and a product of the m and the n is equal in all of the display screens
